Europäisches Patentamt

European Patent Office

Office européen des brevets

(11) Publication number: **0 306 533**
A1

# EUROPEAN PATENT APPLICATION

published in accordance with Art. 158(3) EPC

(21) Application number: **88901641.6**

(22) Date of filing: **15.02.88**

Data of the international application taken as a basis:

(86) International application number:
**PCT/JP 88/00146**

(87) International publication number:
**WO 88/07238 (22.09.88 88/21)**

(51) Int. Cl.⁴: **G 06 F 7/00**, G 06 F 9/38,
G 06 F 15/16

(30) Priority: **17.03.87 JP 60169/87**

(43) Date of publication of application: **15.03.89**
**Bulletin 89/11**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **YONEKURA, Mikio Keio Takao Mansion 1103, 1231-36, Hatsuzawamachi Hachioji-shi, Tokyo 193 (JP)**

(74) Representative: **Brunner, Michael John et al, GILL JENNINGS & EVERY 53-64 Chancery Lane, London WC2A 1HN (GB)**

(54) **HIGH-SPEED FLOATING POINT OPERATION SYSTEM.**

(57) A high-speed floating point arithmetic system comprising a high-speed floating point arithmetic unit (100) including a data memory (3) for storing input command blocks, said unit (100) further including an operating unit (10) for high-speed operation according to a command block stored in the data memory (3) to store again the results of operation in the data memory (3); and a host processor (200) for supplying command blocks to the high-speed floating point arithmetic unit (100) to read the operation data. A plurality of command blocks are stored in the regions of the data memory (3) designated by the host processor (200). Each command block includes the information on that region of data memory (3) which stores the next command blocks to be executed. The operating unit (10) makes reference to this information to successively perform the operation based on the plurality of the stored command blocks.

# DESCRIPTION

TITLE OF THE INVENTION
Fast Floating Point Calculation System

TECHNICAL FIELD

The present invention relates to a fast floating point calculation system.

BACKGROUND ART

As the speed of floating point calculation is very slow in general purpose processors, fast floating point processors ( hereinafter called FFP ), which use a hardware construction for floating point calculation only, are used for that purpose.

In this case, a fast floating point calculation system is constructed wherein a host processor, which is made up of a general purpose processor or processors, supplies the FFP with command blocks which include data needed for calculation and commands the FFP to execute calculation; the FFP comprises a data storing portion which stores the supplied command blocks, and a calculation executing portion which executes the calculations in accordance with the command blocks stored in the data storing portion and again stores the calculation result in the data storing portion. And when a calculation results is stored in the data storing portion, the host processor reads that result.

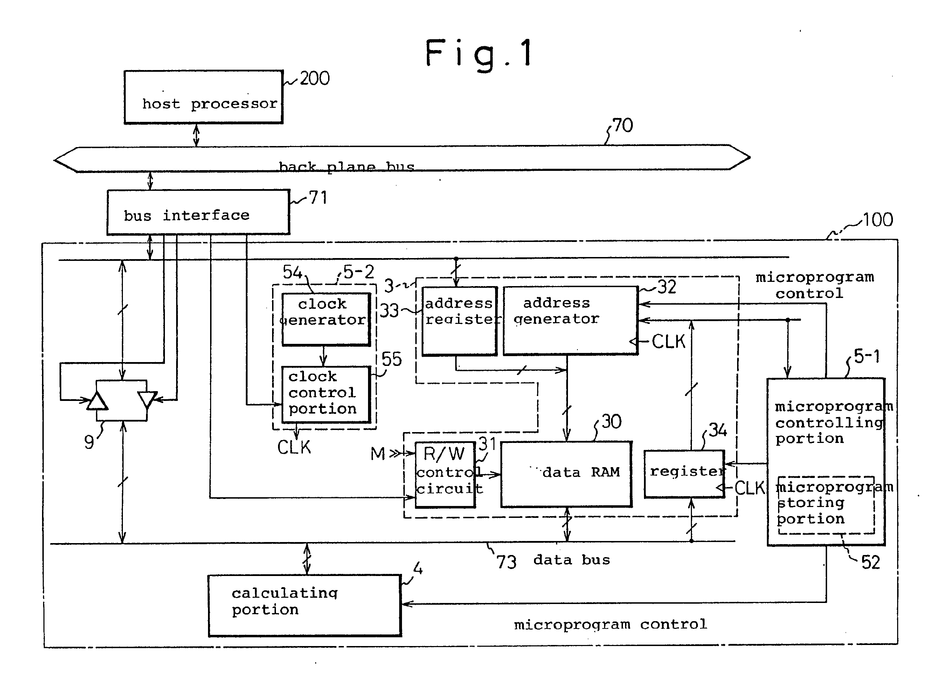

Figure 1 shows an example of the hardware construction for the system as mentioned above. In Fig. 1, reference numeral 100 is a fast floating point processor (FFP), and 200 is a host processor, and these are connected through a back plane bus 70 and a bus interface 71. The construction of the fast floating point processor (FFP) 100 is as described hereinafter.

Reference numeral 3 is a data storing portion, 4 is a calculating portion, 5-1 is a microprogram

controlling portion, 5-2 is a clock generating portion, and 9 is a two-way buffer.

The microprogram controlling portion 5-1 comprises a microprogram storing portion 52 (hereinafter called Writable Control Storage, or WCS), in which a microprogram is written in advance, and the microprogram controlling portion 5-1 controls the data storing portion 3 and the calculating portion 4 in accordance with the microprogram.

The calculating portion 4 reads the data for calculation from the data storing portion 3 under the control of the microprogram controlling portion 5-1 and executes calculation, and writes the calculation results again in the data storing portion 3.

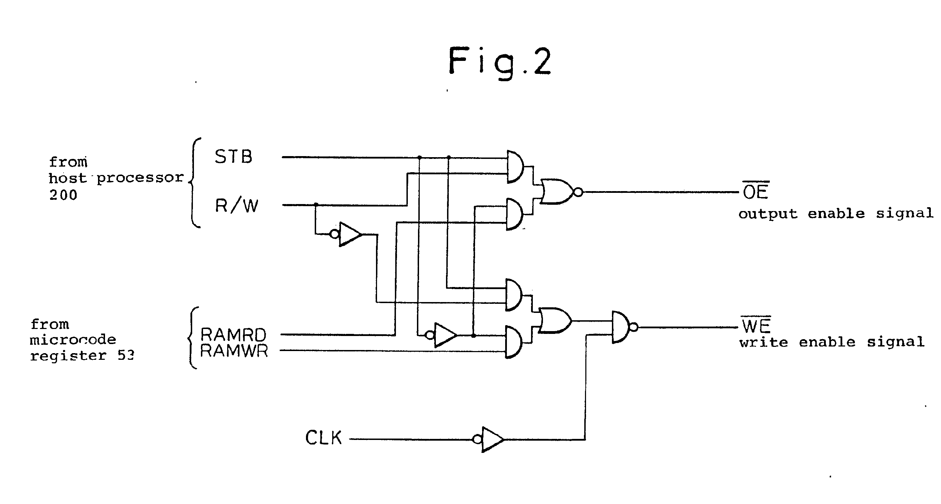

The data storing portion 3 comprises a data RAM 30, a R/W (read/write) control circuit 31, an address generator 33, an address register 33, and a register 34. The data for calculation sent through the two-way buffer 9 and data bus 73 from the host processor 200 is temporarily written in the data RAM 30, and next the data for calculation is read out therefrom. The calculation results of the calculating portion 4 are written again in the data RAM 30, and read out by the host processor 200. The R/W control circuit 31 outputs an output enable signal or a write enable signal to the data RAM 30, under the control of the microprogram controlling portion 5-1 (shown by a symbol "M" in Fig. 1) in the case of data transfer between the data RAM 30 and the calculating portion 4, and by receiving an R/W (read/write) signal and a strobe signal from the host processor 200 in the case of data transfer between the data RAM 30 and the host processor 200. An example of construction of the R/W control circuit 31 is shown in Fig. 2.

The address generator 32 outputs an address of the data RAM 30 under the control of the microprogram controlling portion 5-1 in the case of data transfer between the data RAM 30 and the calculating portion 4. The addressing in the case of data transfer between the host processor 200 and the data RAM 30 is carried out through the address register 33. The register 34 is provided for transferring data from the data RAM 30 to the microprogram controlling portion 5-1, or to the address generator 32.

The clock generating portion 5-2 comprises a clock generator 54 and a clock control portion 55. Clock pulses generated at the clock generator 54 are output through the clock control portion 55, and synchronize the microprogram controlling portion 5-1 and all portions controlled by the microprogram controlling portion 5-1 in the FFP.

The two-way buffer 9 is made by connecting two buffers in parallel with each other, one of which is used for transferring data from the host computer 200 to the data RAM 30, and the other of which is used for transferring data in the opposite direction as shown in Fig. 1. Both buffers are usually in the high-impedance state, and the host computer 200 and the data RAM 30 are electrically isolated. Each of the buffers is made ON by the host processor 200, and enables data transfer.

In the conventional fast floating point calculation system having a hardware construction as mentioned above, the process of writing data from the host processor 200 to the data RAM 30, the process of calculation in the FFP, and the process of reading data from the data RAM 30 to the host processor 200 are carried out as follows:

① The host processor 200 supplies the FFP 100 with a command block which contains a command of a calculation and the data needed for the calculation.

② The FFP 100 executes the calculation in accordance with the command block.

③ The host processor 200 reads the calculation results for the command block from the FFP 100.

④ Repeat the process from① to ③.

In the conventional fast floating point calculation system, it is impossible to supply a plurality of command blocks from the host processor to the FFP at one time.

DISCLOSURE OF THE INVENTION

An object of the present invention is to make it possible for a host processor to supply commands for the following calculations successively, even during the execution of calculation in the fast floating point processor, and make it possible for the fast floating point processor to start the calculation for the next command block when the calculation for the preceding command block is completed, and consequently, to realize a higher execution speed overall.

In the fast floating point calculation system according to the present invention comprising a host processor and a fast floating point processor, the host processor commands the fast floating point processor to execute a calculation by supplying a command block which contains data needed for the calculation; the fast floating point processor comprises a data storing portion which stores the supplied command block, and a calculation executing portion which executes the calculation in accordance with the command block stored in the data storing portion, and stores the calculation result in the data storing portion; the host processor reads the calculation result stored in the data storing portion; wherein each of a plurality of the command blocks is stored in the region addressed by the host processor in the data storing portion, and each of the command blocks contains information showing an address of the region in the data storing portion where the command block to be processed next is stored, and the calculation executing portion successively executes the calculations for the plurality of the command blocks which are stored in advance, with referrence to the information.

BRIEF DESCRIPTION OF THE DRAWINGS

Figure 1 shows an example of the hardware construction of a conventional fast floating point calculation system;

Figure 2 shows an example of the hardware construction of a R/W control circuit 31;

Figure 3 shows an embodiment of the fast floating point calculation system according to the present invention;

Figure 4 shows a first example of the hardware construction of the fast floating point calculation system according to the present invention;

Figure 5 shows an example of the format of a command block and chaining in the fast floating point calculation system according to the present invention;

Figure 6 shows an execution process of the host processor 200;

Figure 7 shows an execution process of the fast floating point processor (FFP) 100;

Figure 8A shows a second example of the hardware construction of the fast floating point calculation system according to the present invention;

Figure 8B shows the construction of the two-way buffer register 1 in Fig. 8A;

Figure 8C shows an example of the construction of the controlling portion for assisting access by the host processor 2 in Fig. 8A;

Figures 9A and 9B show the timing of the controlling portion for assisting access by the host processor 2 in Fig. 8C;

Figure 10A shows the timing of reading and writing data in the hardware constructions shown Figs. 1 and 4;

Figure 10B shows the timing of reading and writing data in the hardware constructions shown Fig. 8A.

BEST MODE FOR CARRYING OUT THE INVENTION

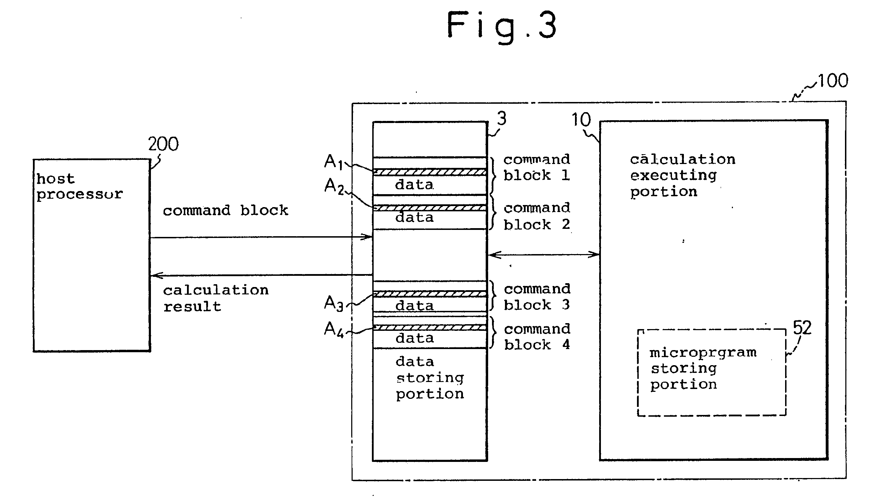

In the fast floating point calculation system according to the present invention, as shown in Figure 3, each of a plurality of the command blocks from a host processor 200 is stored in the region addressed by the host processor 200 in the data storing portion 3 in a FFP 100, and each of the command blocks contains an information $A_1$, $A_2$, $A_3$, $A_4$, ⋯ showing an address of the region in the data storing portion where the command block to be processed next is stored.

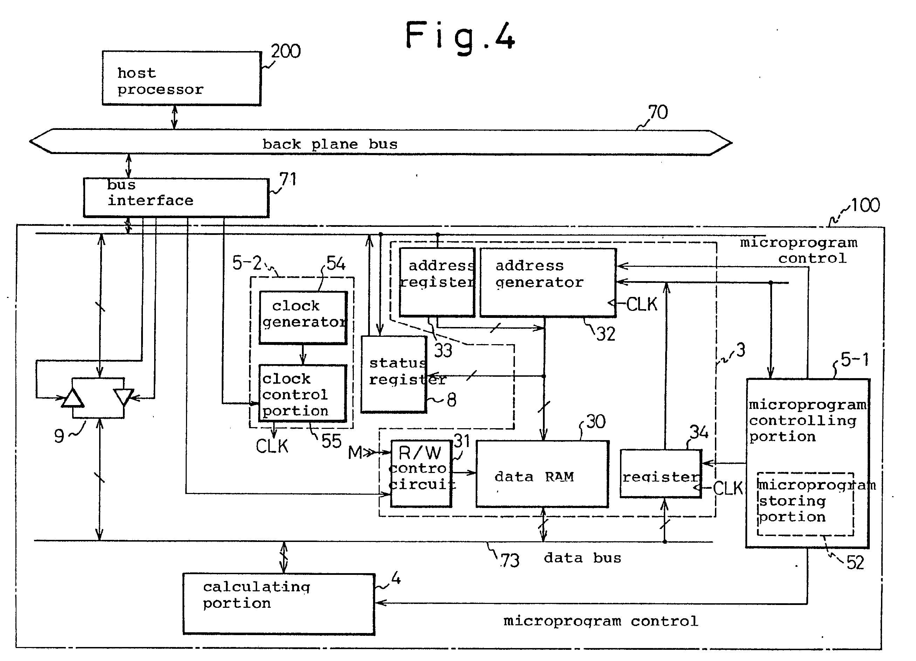

Figure 4 shows a first example of the hardware construction of the fast floating point calculation system according to the present invention. The hardware construction of Fig. 4 is the same as the hardware construction of the Fig. 1, except for the status register 8 provided in Fig. 4.

The status register 8 consists of a group of flags each of which is provided for the corresponding one of a plurality of command blocks which are stored in the data RAM 30, to indicate whether or not the calculation is completed and the calculation result is stored in the data RAM 30. As described later, each of the command blocks transferred from the host processor to the FFP 100 in the first and second embodiments of the present invention contains an identifying number "CB No." for discriminating among the command blocks stored in the data RAM 30 at the same time, and the flag provided for each command block corresponds to the "CB No." Each flag is set in the state "1" when the corresponding command block is written by the host processor 200, and is set in the state "0" when the calculation result is read by the host processor 200.

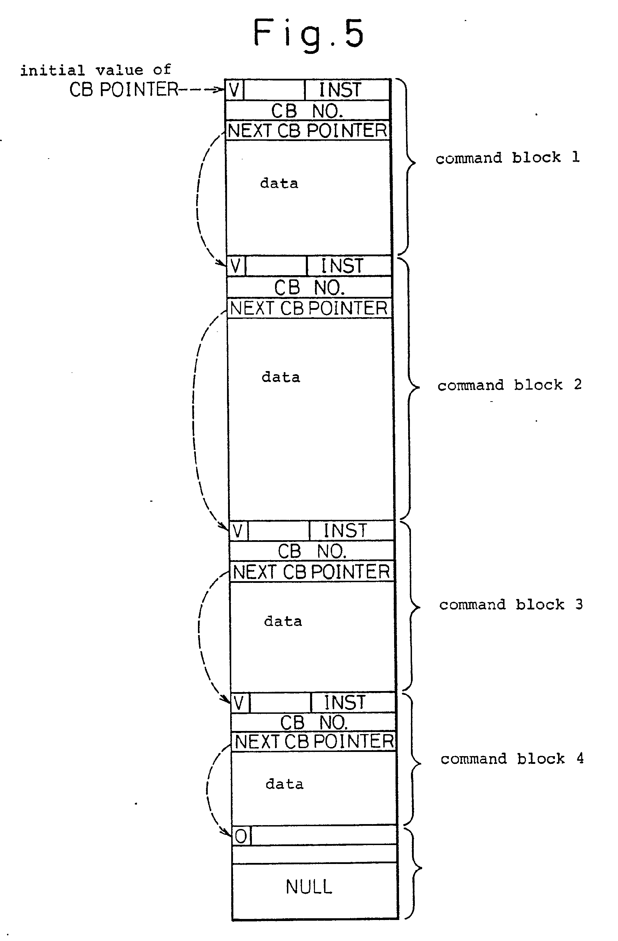

Hereinafter, with reference to Figs. 5, 6 and 7, an example of the data structure of a command block

supplied from the host processor to the FFP in the fast floating point calculating system, and an execution process carried out in the host processor and the FFP using a command block having the above data structure are explained.

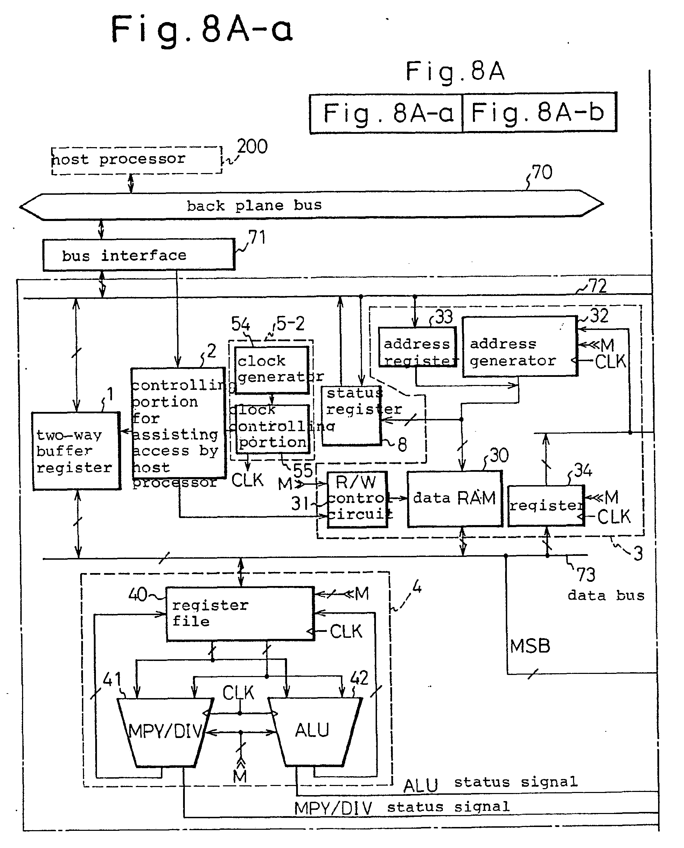

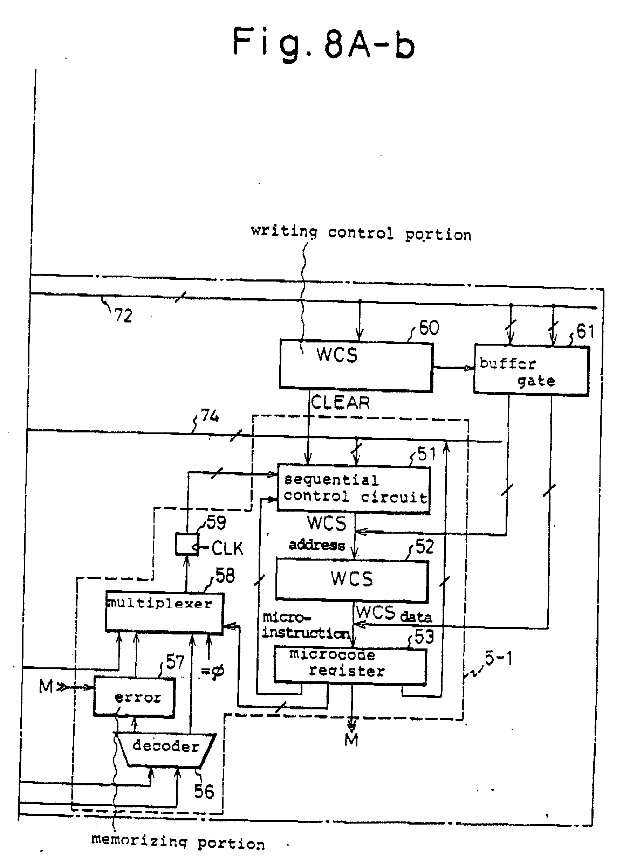

Though these explanations are based on the first example of the hardware construction of the fast floating point calculation system according to the present invention as mentioned above (Fig. 4), these explanations also apply to the second embodiment of the hardware construction of the fast floating point calculation system according to the present invention shown in Fig. 8A and described later.

Figure 5 shows an example of the format of command block (hereinafter called CB) and the chaining in the fast floating point calculation system according to the present invention.

In Fig. 5, the most significant bit (MSB) of the top address in each command block is shown as "V". If this bit is "1", it means that the following command block is to command to execute a calculation, and if the bit is "0", it means that the calculation is completed.

"INST" in Fig. 5 is a abbreviation of "instruction", and this part shows a function to be fulfilled according to the command block. Concretely, that is a top address of the microprogram corresponding to the function.

"CB No." is an identifying number "CB No." for discriminating among the command blocks stored in the data RAM 30 at the same time.

"NEXT CB POINTER" corresponds to "the information showing an address of the region in the data storing portion where the command block to be processed next is stored" according to the present invention and as mentioned before. Here, "CB POINTER" is a register to load the top address of the region in the data storing portion, at which the command block is stored for which the execution of the FFP is carried out at that time. In the construction of Fig. 4 mentioned before, one register A (not shown) in the address register 32 is used for that purpose. Therefore, "NEXT CB POINTER" indicates the top address of the region in the data storing portion 3, at which the command block is stored for which command block the execution of the FFP to be carried out next.

Data needed for execution of the calculation are stored in the portions following the above informations.

In Fig. 5, since the content of the top address of the command block next to the command block 4, i.e., the last command block, is "0", the following data region is "NULL (nothing)".

The region at which each of the command blocks is stored can be located arbitrarily unless the regions of the command blocks overlap each other or the other memory region, and the locations of the command blocks are determined by the host processor 200.

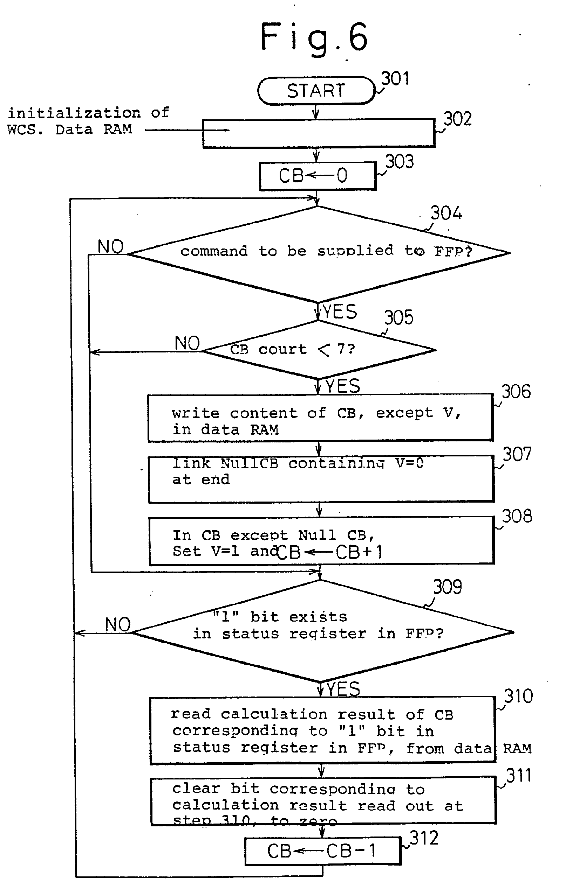

Figure 6 shows an execution process of the host processor 200 in the fast floating point calculating system as an embodiment of the present invention.

At the start, in step 302, the contents of the microprogram storing portion (WCS) 52 (in the hardware construction of Fig. 4) and the data RAM 30 are initialized, and in step 303, a count of the command blocks (a count value which indicates the number of command blocks supplied to the FFP but for which the corresponding calculation result has not been read out) is set to zero.

In step 304, it is determined whether or not there is a prepared command block to be supplied to the FFP, to make the FFP execute the calculation. If NO, the program jumps to steps (309 ~312) for reading out the calculation results, but a prepared command block is to be supplied to the FFP, the program jumps to step 305, and it is determined whether the number of command blocks supplied to the FFP, but for which the corresponding calculation result has not been read out, has reached the maximum number of command blocks that can be stored in that FFP at the same time. (The maximum number is shown as eight in the example of Fig. 6, although, since in the example of Fig. 6, the count of the command blocks, i.e.,CB count begins from CB=0 as mentioned above, the maximum CB count is seven.) If the maximum number of the command blocks that can be stored at the same time are already stored in the FFP, no more command block can be input, and therefore, the steps 309~312 for reading out the calculation results are carried out. If there is room to input more command blocks, the program proceeds to step 306. In step 306, while maintaining the aforementioned MSB of the top address, i.e., "V", at zero, all of the content of the command block except for "V" is written in the data RAM 30. The "V" is kept at zero to prevent the FFP from reading "V=1" and reading the content following the bit "V=1" in the data RAM 30 as a command, in error, before the host processor completes the writing of the command block. When the writing of the of the command block except for "V" is completed, in step 307, a NULL command block which contains V=0 is written in the address shown by the content of the "NEXT CB POINTER" in the command block in step 306. When the next new command block is input, it is written from this address. Next, in step 308, the "V" in the command block in the abovementioned step 306 is set to "1", and the count of the command blocks is incremented.

The steps for reading out the calculation results begin at step 309. In step 309, it is determined whether or not the content of the status register (described later)·in the FFP is "1". The status register in the FFP, as mentioned before in the description of Fig. 4, consists of a group of flags, each of which is provided

00306533

for the corresponding one of the "CB Nos.". When the FFP completes a calculation, the FFP stores the result in the predetermined region in the data storing portion (data RAM 30), and then sets the corresponding flag in the status register in the state "1". If no flag is in the state "1", a calculation result has not been obtained yet in the FFP, and therefore, the program jumps again to steps 304~308 for writing data. If any bit in the status register is in the state "1", the calculation result of the command block corresponding to that bit is read from the data RAM 30 in step 310, and then the bit in the status register corresponding to the read out calculation result is cleared to zero in step 311. In step 312, the CB count is decremented corresponding to the reading of the one calculation result, and thus room for the input of a new command block is generated. The program then, jumps to step 304.

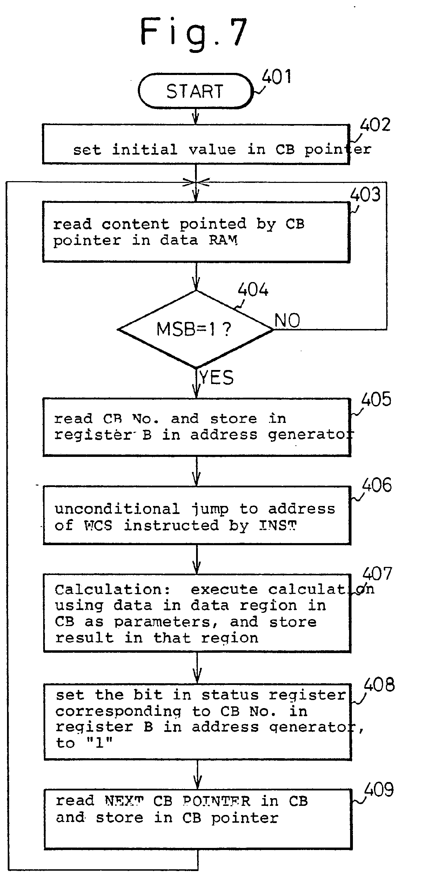

Figure 7 shows an execution process of the fast floating point processor (FFP) 100.

At the start, first an initial value is set in the CB pointer in step 402. The CB pointer is described in the explanation of Fig. 5.

Next, the content of the data RAM 30 addressed by the CB pointer is read out in step 403. In step 404, it is determined whether or not the MSB of the top address, i.e., the aforementioned "V" bit, is "1". If zero, no command block commanding an execution of a calculation has been input to the data RAM 30, and the FFP waits in the loop of steps 403 and 404 until such an input is made. If V(MSB)=1 in step 404, the FFP reads the "CB No. " of the command block shown in Fig. 5, and in step 405, stores the "CB No." in a register B (not shown) in the address genetrator 32 in Fig. 4.

Step 407 corresponds to the execution of the fast floating point calculation in the FFP, and in step 407, the FFP executes the calculation using the data in the data region in the command block as parameters, and stores the calculation result in the data region of the command block.

In step 408, as mentioned before in the explanation of Fig. 6, the FFP sets the bit in the status register corresponding to the "CB No." in the command block in which the calculation result is stored in the state "1", i.e., the FFP shows that the calculation result in the command block can be read.

In step 409, the FFP reads the "NEXT CB POINTER" in the above command block and stores the top address of the region in the data RAM at which the next command block is stored, in the aforementioned CB pointer (the register A in the address generator 32), and then proceeds to step 403 for the execution for the next command block.

As mentioned above, by using the abovementioned data structure of command blocks and the execution processes in the host processor and the FFP, the host processor can supply the following commands successively even during the execution of a calculation by the FFP, and thus the FFP can start the execution of a calculation for the next command block immediately after the execution of the calculation for the preceding command block is completed.

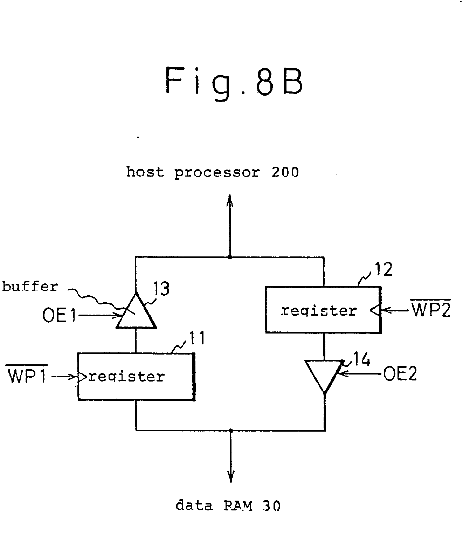

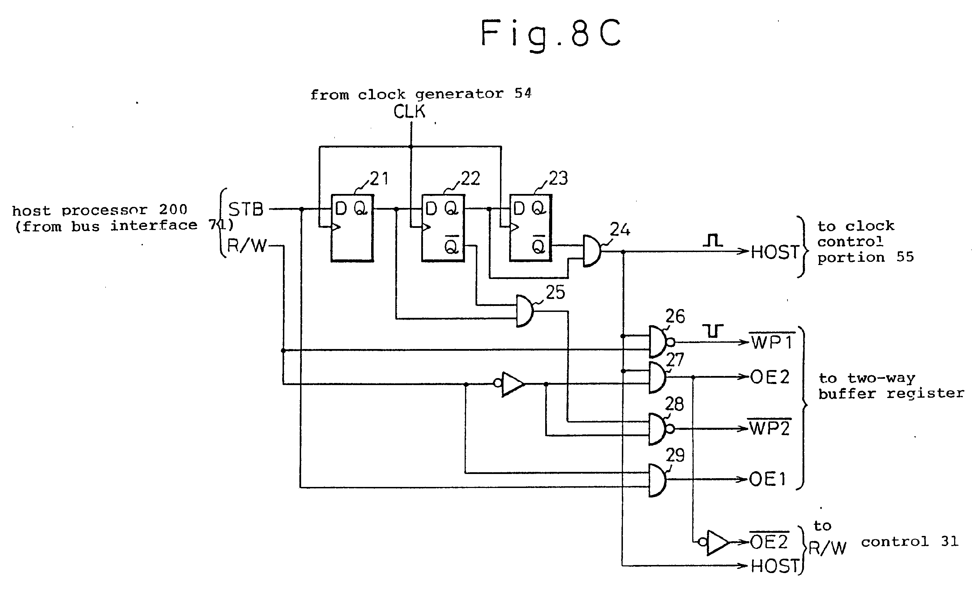

Next, a second example of the hardware construction of the fast floating point calculation system according to the present invention is explained with reference to Figures 8A, 8B, and 8C.

In the construction of Fig. 8A, the connection to the host processor 200 through the back plane bus 70 and the bus interface 71, the construction and the function of the data storing portion 3 and the clock generating portion 5-2, and the function of the microprogram controlling portion 5-1, the calculating portion 4, and the status register 8, are the same as in the FFP in Fig. 1. More details of the internal construction of the microprogram controlling portion 5-1 and the calculating portion 4 are shown in Fig. 8A. As the detailed internal construction of the microprogram controlling portion 5-1 and the calculating portion 4 does not directly relate to the present invention, it is briefly explained hereinafter.

The calculating portion 4 comprises a register file 40, a floating point multiplier/divider (MPY/DIV) 41, and a floating point arithmetic logic unit (ALU) 42.

The register file 40 reads data for calculation from the data RAM 30, and supplies the data to the MPY/DIV 41, under the control of the microprogram controlling portion 5-1, or holds the data during the calculation and the final calculation result therein. The final calculation result is written in the data RAM 30 from the register file 40.

The ALU 42 executes addition/subtraction calculations and comparison/logic calculations, and the MPY/DIV 41 executes multiplication/division calculations. Each of the ALU 42 and the MPY/DIV 41 has two kinds of outputs, respectively. One is the output of the results of arithmetic calculations such as the addition/subtraction calculations or multiplication/division calculations, and these results of arithmetic calculations are input to the register file 40. The other output from each of the ALU 42 and the MPY/DIV 41 comprises status signals showing the results of the comparison/logic calculations or the occurence of errors during the calculations. As mentioned later, the microprogram controlling portion 5-1 decodes the status signal and determines the microinstruction to be executed next.

The microprogram controlling portion 5-1 comprises a sequential control circuit 51, the aforementioned WCS, a microcode register 53, a decoder 56, an error memorizing portion 57, a multiplexer 58, and a register 59.

The WCS consists of a RAM, and a microprogram from

00306533

the host processor 200 is written in the WCS 52 at the beginning of the execution of the FFP. When a WCS writing control portion 60 receives a request for writing of a program from the host processor 200, it holds the sequential control circuit 51 at the initial state by applying a CLEAR signal output to the sequential control circuit 51, and opens a buffer gate 61. WCS addresses and WCS data (microinstruction) from the host processor 200 are input to the WCS 52 through the two gates of the buffer gate 61.

When the sequential control circuit 51 outputs the address of the WCS 52, a microinstruction stored at the address is loaded in the microcode register 53, and the microinstruction is executed. Here, the status signals from the calculating portion 4 are decoded through a decoder, the error memorizing portion 57, and the multipler 58, and the contents of the status signals are loaded in the register 59 in turn. The sequential control circuit 51 outputs the next address based on the content of the register 59. The microprogram controlling portion 5-1 operates as mentioned above.

The above explanation of the detailed construction of the calculating portion 4 and the microprogram controlling portion 5-1 also can be applied to the constructions of Figs. 1 and 4.

The construction of the two-way buffer register 1 is shown in Figure 8B. In Fig. 8B, reference numerals 11, 12 are registers to which applied data are written under the control (a signal $\overline{WP1}$ and $\overline{WP2}$) of the controlling portion for assisting access by host processor 2, and reference numerals 13, 14 are (tri-state, or three-state) buffers which output data under the control (a signal $\overline{OE1}$ and $\overline{OE2}$) of the controlling portion for assisting access by host processor 2.

The construction of the controlling portion for assisting access by host processor 2 is shown in Figure 8C. In Fig. 8C, reference numerals 21, 22, 23 are D flip-flop circuits, 24, 25, 27, 29 are AND circuits, and 26, 28 are NAND circuits.

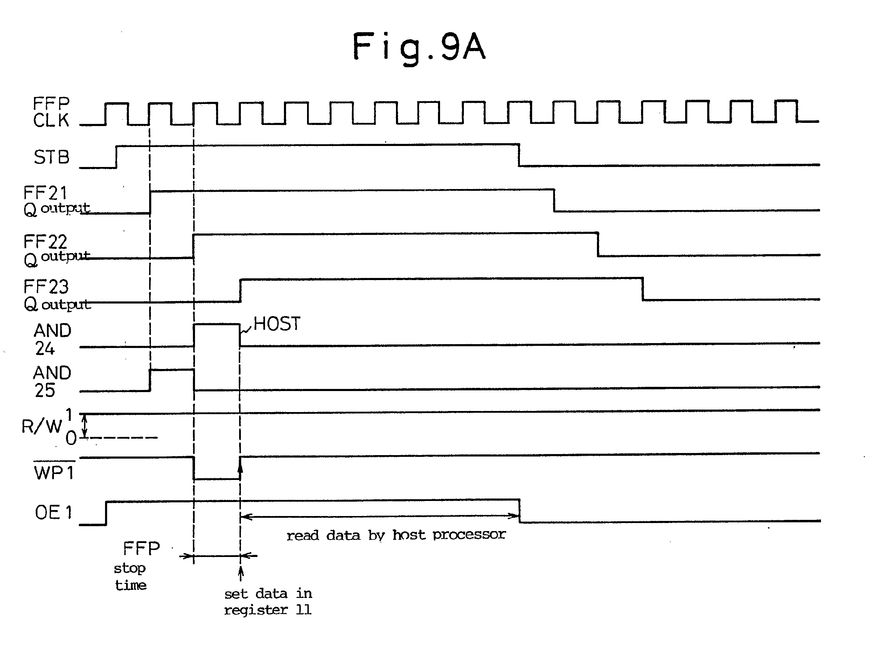

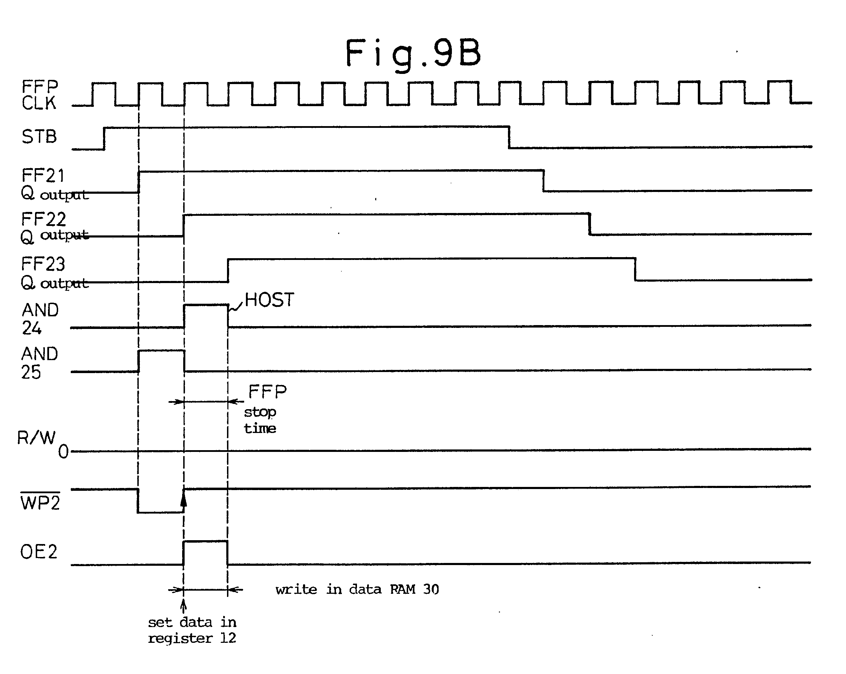

Figures 9A and 9B show the timing of the controlling portion for assisting access by the host processor 2.

Figure 9A shows the timing when reading data in the data RAM 30 to the host processor 200. As shown in Fig. 8C, a strobe signal (STB) and a read/write (R/W) signal are input to the controlling portion for assisting access by the host processor 2 from the host processor 200 through the bus interface 71. These signals are input to the R/W control circuit 31 through the bus interface 71 in the conventional construction of Fig. 1 (Fig. 2). Here, the R/W signal is always in the state "0" at the time of writing data, and always in the state "1" at the time of reading data. As the operation of the circuit can be readily understood, only the input-output relationships are explained here.

As shown in Fig. 9A, when the R/W signal is in the state "0", the outputs are "HOST", "$\overline{WP1}$", and "OE1". The HOST is input to the clock controlling portion 55 in Fig. 8A, and stops the clock pulses which synchronize the FFP. The WP1 is applied as a trigger input of the register 11 in the two-way buffer register 1, as shown in Fig. 8B. As shown in Fig. 9A, at the timing of leading edge of the $\overline{WP1}$, the data transferred from the data RAM 30 is set in the register 11. Another output OE1 is applied as a control input of a (tri-state, or three-state) buffer 13 in the two-way buffer register 1 in Fig. 8B. As the signal OE1 becomes "1" at the same time as the strobe signal from the bus interface 71, the data loaded in the register 11 after the data is set in the register 11 and before the strobe signal becomes "0", is read by the host processor 200. At this time, the above HOST signal, and an $\overline{OE2}$ signal which is an inversion of an OE2 signal, are input to the R/W control circuit 31 instead of the strobe signal and the R/W

00306533

signal. Since the OE2 is "0" when reading data, the data is read, as understood by Fig. 2, from the R/W control circuit 31 when the above HOST signal becomes "1", i.e., when the $\overline{WP1}$ becomes "0". This data is set in the register 11. When the data is set in the register 11, the HOST returns to "0", and therefore, the stop control of the clock pulses of the clock control portion 55 is stopped, i.e., the stop of the clock pulses is released when the setting data in the register 11 is completed. The stop time of the clock pulse is one cycle time of the clock pulse in the FFP.

Next, the timing of writing data from the host processor 200 to the data RAM 30 is explained with reference to Fig. 9B. As the operation of the circuit of Fig. 8C is readily understood, only the outputs "HOST", "$\overline{WP2}$", and "OE2" are explained in this case.

The HOST signal plays the same role as in the case of Fig. 9A. The output $\overline{WP2}$ is applied as a trigger input of the register 12 in the two-way buffer register 1 as shown in Fig. 8B. The OE2 is applied as a control input of the (tri-state) buffer 14 in the two-way buffer register 1, and becomes "1" at the same time as the above HOST signal. The signal OE2 is inverted as an $\overline{OE2}$ signal and input to the R/W control circuit 31 together with the HOST, and then makes the R/W control circuit 31 output a write enable signal.

Therefore, first, after the data from the host processor 200 is set in the register 12 in the two-way buffer register 1 by the WP2, then at the same time, the HOST signal stops the clock pulses which synchronize the FFP, and the HOST signal and the $\overline{OE2}$ signal operate on the R/W control circuit 31, and makes the data RAM 30 writable, and further, at the same time, the OE2 opens the (tri-state) buffer 14 in the two-way buffer register 1. Therefore, the data from the host processor 200 is written in the data RAM 30. In this case, the stop time of the FFP is one cycle time of the clock pulse in the FFP.

Hereinafter, the timing of writing data from the host processor 200 to the data RAM, and the timing of reading data to the host processor 200 is considered in the cases of the FFP having a construction of Fig. 4 (and Fig. 1), and the FFP having a construction of Fig. 8A.

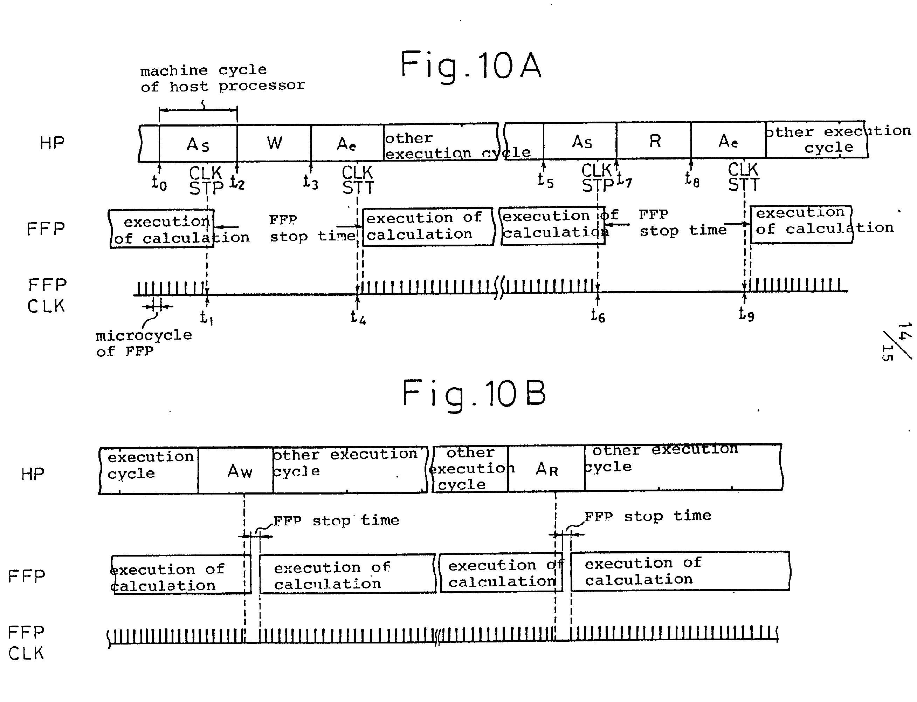

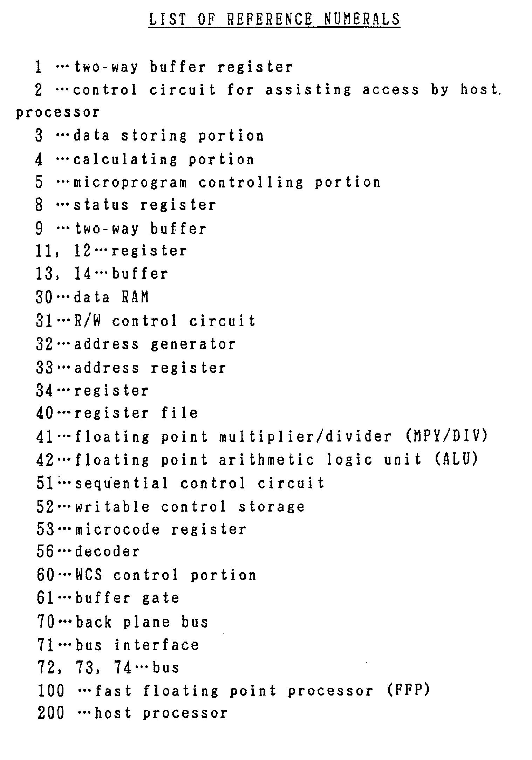

Figure 10A shows the timing of writing data from the host processor (hereinafter called HP in Figs. 10A and 10B) 200 to the data RAM 30, and reading data from the data RAM 30 to the host processor 200 in the fast floating point processor (FFP) 100 shown Fig. 4. In Fig. 10A, the execution cycles in the host processor (HP) 200 are shown in (a), the executing time of the calculation amd stop time in the FFP 100 are shown in (b), and the timing of the clock pulse (CLK) in the FFP 100 is shown in (c).

$A_s$ indicates a cycle in which the host processor 200 outputs a signal to stop the clock pulse (clock stop signal). When the clock stop signal is input to the clock control portion 55 in the FFP 100, the clock control portion 55 stops the output of the clock pulse in the FFP (time $t_1$), and thus the execution of the calculation in the FFP 100 is stoped.

Next, the host processor 200 opens a (tri-state) buffer in the two-way buffer 9 which is directed from the host processor 200 to the data RAM 30, makes the R/W signal "0", and outputs a strobe signal to the R/W control circuit 31, and thus the writing of data from the host processor 200 to the data RAM 30 is begun (time $t_2$).

In Fig. 10A, a symbol "W" indicates a cycle in which data is written from the host processor 200 to the FFP 100.

When the writing of data from the host processor 200 to the data RAM 30 is completed at time $t_3$, a cycle $A_e$, in which the stop of the FFP 100 is released, as the next machine cycle of the host processor 200, is started, and a clock restart signal for releasing the stop of the clock pulse is output from the host processor 200. The clock control portion 55 receives the clock restart signal (time $t_4$), and restarts the output of the clock pulse, and thus the FFP 100 restarts the execution of the calculation.

When reading from the host processor 200, as shown at the right side of Fig. 10A, the timing relationships are the same as in the case mentioned above. The only difference between the reading case and the writing case exists in the cycle of reading data from FFP to the host processor, which cycle starts at time $t_7$. At this time, the host processor 200 opens the buffer directed to the host processor 200 in the two-way buffer register 9, makes the R/W signal "1", and applies it to the R/W control circuit 31 together with the strobe (STB) signal. Thus the R/W control circuit outputs a data enable signal ($\overline{OE}$) to the data RAM 30, and consequently, data is read from the data RAM 30 to the host processor 200.

As understood in Fig. 10A, when transferring data between the FFP 100 having the construction of Fig. 4 and the host processor 200, when writing from or reading to the host processor, the stop time of the FFP 100 is about twice the machine cycle of the host processor 200. In the example of Fig. 1, in practice, this time is about $2\mu$ sec.

Figure 10B shows the timing of a data transfer between the host processor 200 and the data RAM 30 in the FFP in the case of Fig. 8A.

In Fig. 10B, the execution cycles in the host processor (HP) 200 are shown in (a), the executing time of the calculation and stop time in the FFP are shown in (b), and the timing of the clock pulse (CLK) in the FFP is shown in (c).

In Fig. 10B, Aw indicates a data writing cycle in the host processor 200, and $A_R$ is a data read cycle .
As understood from the explanation of Figs. 9A and 9B,
each of the stop time for data writing and the stop
time for data reading is one microcycle of the FFP (0.1
$\mu$ sec in this embodiment).

As mentioned above, the hardware construction of
Fig. 8A, allows a remarkable reduction of the stop time
of the FFP when writing data from the host processor
200 to the FFP 100, and when reading the calculation
result. This is especially advantageous when applying
the execution processes executed in the host processor
200 and the FFP 100, using the data structure of the
command block explained with reference to Figs. 5, 6,
and 7, and the command block having that data structure,
because in the above data structure and the execution
process, even during execution of the FFP, the following
commands can be supplied successively by suitably
interupting the execution, and therefore, the stop time
of the execution in the FFP due to the interuption can
be reduced by a factor of ten.

As mentioned hitherto, in the fast floating point
calculation system according to the present invention, a
host processor can successively supply commands for the
following calculations even during the execution of
calculation in the FFP, and the FFP can start the
calculation for the next command block immediately when
the calculation for the preceding command block is
completed, and consequently, a higher overall execution
speed can be realized.

Further, when the hardware construction shown in
Figs. 8A, 8B, and 8C is used, the stop time of the
execution when the host processor supplies the FFP with
a command block, and when the host processor reads the
calculation result from the FFP, is remarkably reduced,
and therefore, the FFP can execute calculations for
successive command blocks without disturbance by inputs
from and outputs to the host processor, and consequently, the overall execution speed is improved.

INDUSTRIAL APPLICABILITY

The present invention is useful when applied to a system comprising a host processor and a fast floating point processor, which executes a calculation at a high speed when a command of the calculation is given by the host processor, and the calculation result is read by the host processor.

# C L A I M S

1. A fast floating point calculation system comprising: a host processor (200) and a fast floating point processor (100); said host processor (200) commanding said fast floating point processor (100) to execute a calculation by supplying a command block which contains data needed for the calculation; said fast floating point processor (100) comprising a data storing portion (3) which stores the supplied command block, and a calculation executing portion (10) which executes the calculation in accordance with the command block stored in said data storing portion (3) and stores the calculation result in said data storing portion (3); said host processor (100) reading the calculation result stored in said data storing portion (3); wherein each of a plurality of the command blocks is stored in the region addressed by said host processor (100) in said data storing portion (3), and each of the command blocks contains an information showing an address of the region in said data storing portion (3) where the command block to be processed next is stored, and said calculation executing portion (10) successively executes the calculations for the plurality of the command blocks which are stored in advance by referring to the information.

2. A fast floating point calculation system according to claim 1, wherein each of said command blocks further contains a flag for indicating the completion of the calculation.

3. A fast floating point calculation system according to claim 1, wherein each of said command blocks further contains an identifying number for discriminating among the command blocks stored in said data storing portion (3) at the same time,

and when the calculation result for each of the command blocks is stored in said data storing portion (3), said calculation executing portion (10) indicates that the calculation result for the command block can be read by said host processor (100), using said identifying number,

said host processor (100) recognizes that the calculation result can be read by said indication, reads the calculation result from said data storing portion (3), and clears the indication.

4. A fast floating point calculation system according to claim 1, wherein said host processor (100) maintains the difference between the number of the command blocks input and the number of the command blocks for which the calculation results are read out, at not more than a predetermined value.

5. A fast floating point calculation system according to claim 1, wherein said calculation executing portion (10) has a microprogram storing portion (52) which stores a microprogram to execute the calculation,

and each of said command blocks further contains information addressing a region at which the microprogram is stored in said microprogram storing portion (52).

6. A fast floating point calculation system according to claims 1~5, wherein a two way buffer register (1) is provided between said host processor (100) and said data storing portion (3), to load data temporarily when writing a command block from said host processor to said data storing portion (3) and when reading the calculation result from said data storing portion (3) to said host processor (100).

# Fig.1

host processor ~200

back plane bus ~70

bus interface ~71

~100

microprogram control

54  5-2
clock generator

3 33
address register ~32
address generator
~CLK

55
clock control portion

5-1
microprogram controlling portion

52
microprogram storing portion

CLK

M → R/W control circuit 31

data RAM ~30

register ~34
~CLK

9

73  data bus

calculating portion ~4

microprogram control

00306533

FF-8528/PCT

# Fig.2

from host processor 200
- STB
- R/W

from microcode register 53
- RAMRD
- RAMWR

CLK

$\overline{OE}$ output enable signal

$\overline{WE}$ write enable signal

0306533

# Fig.3

host processor — 200

command block →

← calculation result

— 100

calculation executing portion — 10

data storing portion — 3

A₁ ... command block 1 (data)
A₂ ... command block 2 (data)
A₃ ... command block 3 (data)
A₄ ... command block 4 (data)

microprgram storing portion — 52

3/15

# Fig.4

host processor 200

back plane bus 70

bus interface 71

100

microprogram control

5-2 54

clock generator

clock control portion

55

CLK

9

address register

address generator 32

CLK

33

status register 8

M

R/W control circuit 31

data RAM 30

register 34

CLK

3

5-1

microprogram controlling portion

microprogram storing portion

52

73 data bus

calculating portion 4

microprogram control

4/15

C0306533

# Fig.5

initial value of
CB POINTER ---→

| V | | INST |
|---|---|---|
| | CB NO. | |

NEXT CB POINTER

data

command block 1

| V | | INST |
|---|---|---|
| | CB NO. | |

NEXT CB POINTER

data

command block 2

| V | | INST |
|---|---|---|
| | CB NO. | |

NEXT CB POINTER

data

command block 3

| V | | INST |
|---|---|---|
| | CB NO. | |

NEXT CB POINTER

data

command block 4

| O | | |
|---|---|---|

NULL

00306533

# Fig.6

initialization of
WCS. Data RAM

START ⟩301

302

CB◄─0 303

command to be supplied to FFP? 304
NO / YES

305
NO / CB court < 7?
YES

write content of CB, except V, in data RAM 306

link NullCB containing V=0 at end 307

In CB except Null CB, Set V=1 and CB◄─CB+1 308

"1" bit exists in status register in FFP? 309
NO / YES

read calculation result of CB corresponding to "1" bit in status register in FFP, from data RAM 310

clear bit corresponding to calculation result read out at step 310, to zero 311

CB◄─CB-1 312

# Fig.7

START — 401

set initial value in CB pointer — 402

read content pointed by CB pointer in data RAM — 403

MSB=1 ? — 404

NO

YES

read CB No. and store in register B in address generator — 405

unconditional jump to address of WCS instructed by INST — 406

Calculation: execute calculation using data in data region in CB as parameters, and store result in that region — 407

set the bit in status register corresponding to CB No. in register B in address generator, to "1" — 408

read NEXT CB POINTER in CB and store in CB pointer — 409

# Fig.8A-a

Fig.8A

| Fig.8A-a | Fig.8A-b |

# Fig. 8A-b

writing control portion

72

WCS  60

buffer gate  61

CLEAR

74

sequential control circuit  51

WCS
address

WCS  52

WCS data

59  CLK

58

multiplexer

micro-instruction

microcode register  53

5-1

57

M

error

=φ

M

decoder

56

memorizing portion

# Fig.8B

host processor 200

buffer

OE1 ——▷ 13

$\overline{WP1}$ ——▷ register 11

register 12 ◁—— $\overline{WP2}$

14 —— OE2

data RAM 30

# Fig.8C

from clock generator 54

CLK

host processor 200
(from bus interface 71)

STB

R/W

21  22  23

D Q  D Q  D Q

Q̄  Q̄

24

HOST { to clock
control
portion 55

25

26  WP1

27  OE2

28  WP2

29  OE1

} to two-way
buffer register 1

OE2 } to
R/W control 31

HOST

11/15

0306533

# Fig.9A

FFP CLK

STB

FF21 Q output

FF22 Q output

FF23 Q output

AND 24 — HOST

AND 25

R/W 1 0

$\overline{WP1}$

OE 1

read data by host processor

FFP stop time

set data in register 11

# Fig.9B

Fig.10A

Fig.10B

## LIST OF REFERENCE NUMERALS

1 ···two-way buffer register
2 ···control circuit for assisting access by host. processor
3 ···data storing portion
4 ···calculating portion
5 ···microprogram controlling portion
8 ···status register
9 ···two-way buffer
11, 12···register
13, 14···buffer
30···data RAM
31···R/W control circuit
32···address generator
33···address register
34···register
40···register file
41···floating point multiplier/divider (MPY/DIV)
42···floating point arithmetic logic unit (ALU)
51···sequential control circuit
52···writable control storage
53···microcode register
56···decoder
60···WCS control portion
61···buffer gate
70···back plane bus
71···bus interface
72, 73, 74···bus
100 ···fast floating point processor (FFP)
200 ···host processor

# INTERNATIONAL SEARCH REPORT 00306533

International Application No  PCT/JP88/00146

## I. CLASSIFICATION OF SUBJECT MATTER (if several classification symbols apply, indicate all) 6

According to International Patent Classification (IPC) or to both National Classification and IPC

Int.Cl$^4$    G06F7/00, 9/38, 15/16

## II. FIELDS SEARCHED

| Minimum Documentation Searched 7 | |
|---|---|
| Classification System 1 | Classification Symbols |
| IPC | G06F7/00, 9/38, 13/12, 15/16 |

| Documentation Searched other than Minimum Documentation to the Extent that such Documents are Included in the Fields Searched 8 |
|---|
| |

## III. DOCUMENTS CONSIDERED TO BE RELEVANT 9

| Category * 1 | Citation of Document, 11 with indication, where appropriate, of the relevant passages 12 | Relevant to Claim No. 13 |
|---|---|---|
| Y | JP, A, 55-59540 (Fujitsu Ltd.) 6 May 1980 (06. 05. 80) P.2, upper left column, line 19 to p.5, lower right column, line 11 (Family: none) | 1-6 |
| Y | JP, A, 56-88532 (Fujitsu Ltd.) 18 July 1981 (18. 07. 81) P.2, upper right column, line 12 to p.4, lower left column, line 3 (Family: none) | 1-6 |
| Y | JP, A, 56-114023 (NEC Corporation) 8 September 1981 (08. 09. 81) P.2, upper right column, line 10 to p.3, lower left column, line 12 (Family: none) | 1-6 |
| Y | JP, A, 57-25045 (NEC Corporation) 9 February 1982 (09. 02. 82) P.3, upper left column, line 5 to p.4, upper right column, line 16 | 1-6 |

\* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| May 11, 1988 (11. 05. 88) | May 23, 1988 (23. 05. 88) |
| International Searching Authority | Signature of Authorized Officer |
| Japanese Patent Office | |

Form PCT/ISA/210 (second sheet) (January 1985)

International Application No PCT/JP86/00243

| FURTHER INFORMATION CONTINUED FROM THE SECOND SHEET | | |
|---|---|---|
| | (Family: none) | |
| Y | JP, A, 59-16072 (Digital Equipment Corporation) 27 January 1984 (27. 01. 84) P.4, upper left column, line 16 to p.10, upper right column, line 12 (Family: none) | 1-6 |

---

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

---

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)